# EUROPÄISCHE PATENTANMELDUNG

(11) **EP 3 059 402 A1**
(43) Veröffentlichungstag der Anmeldung: **24.08.2016**
(21) Anmeldenummer: 16150875.9
(22) Anmeldetag: 12.01.2016
(51) Int. Cl.: F01L 1/352

(54) **VORRICHTUNG ZUR PHASENVERSCHIEBUNG DES DREHWINKELS EINES ANTRIEBSTEILS ZU EINEM ABTRIEBSTEIL**

(30) Priorität: 23.02.2015 DE 102015102543
(71) Anmelder: Pierburg GmbH, 41460 Neuss (DE)
(72) Erfinder: Dr. Krebber-Hortmann, Karl, 40221 Düsseldorf (DE); Dr. Tönnesmann, Andres, 52066 Aachen (DE); Brunetti, Costantino, 58730 Fröndenberg (DE); Köster, Andreas, 45149 Essen (DE); Zielberg, Stephan, 44866 Bochum (DE); Sansone, Manuel, 40479 Düsseldorf (DE)
(74) Vertreter: Patentanwälte ter Smitten Eberlein Rütten Partnerschaftsgesellschaft

(57) **Zusammenfassung**

Vorrichtungen zur Phasenverschiebung des Drehwinkels eines Antriebsteils (10) zu einem Abtriebsteil (64) mit einem zwischengeschalteten Exzentergetriebe (26) sind bekannt.

Um einen solchen Phasensteller möglichst kompakt bauen zu können und eine Langlebigkeit der Lager sicherzustellen, wird erfindungsgemäß vorgeschlagen, dass die Exzenterwelle (38) über ein erstes Lager (40) und ein zweites Lager (42) gelagert ist, welche an axial gegenüberliegenden Seiten der Innenräder (30, 32) und radial innerhalb des als Lageraufnahme für das erste Lager (40) und das zweite Lager (42) dienenden Antriebsteils (10) angeordnet sind.

## Beschreibung

Die Erfindung betrifft eine Vorrichtung zur Phasenverschiebung des Drehwinkels eines Antriebsteils zu einem Abtriebsteil mit einem Exzentergetriebe bestehend aus einem innenverzahnten ersten Hohlrad, welches drehfest mit dem Antriebsteil verbunden ist, einem innenverzahnten zweiten Hohlrad, welches drehfest mit dem Abtriebsteil verbunden ist und zwei drehfest miteinander verbundenen außenverzahnten Innenrädern, die auf einem Exzenter gelagert sind, der an einer Exzenterwelle ausgebildet ist, wobei das erste der beiden Innenrädern mit dem ersten Hohlrad in Eingriff steht und das zweite der beiden Innenräder mit dem zweiten Hohlrad in Eingriff steht und die Übersetzung zwischen dem ersten Innenrad und dem ersten Hohlrad eine andere Übersetzung ist als die zwischen dem zweiten Innenrad und dem zweiten Hohlrad, und wobei die Exzenterwelle über einen Aktor drehbar ist.

Derartige Vorrichtungen sind insbesondere zur Phasenverschiebung zwischen einer Kurbelwelle und einer Nockenwelle eines Verbrennungsmotors bekannt. Die Phasenverschiebung dient zur variablen Ventilzeitsteuerung zur Verbesserung des Ladungswechselprozesses im Motor. Die verwendeten Aktoren werden üblicherweise elektrisch über einen Elektromotor oder hydraulisch betrieben. Als besonders vorteilhaft zur Phasenverschiebung zwischen der Nockenwelle und der Kurbelwelle haben sich Exzentergetriebe herausgestellt, bei denen die Verschiebung zwischen dem Antriebskettenrad und der Nockenwelle dadurch hergestellt wird, dass der Exzenter nicht mit der Geschwindigkeit der Nockenwelle umläuft, sondern relativ zu dieser gedreht wird. Bekannte Ausführungsformen solcher Exzentergetriebe sind Zykloidgetriebe oder Planetenexzentergetriebe. Diese Getriebe ermöglichen eine stufenlose und üblicherweise feinfühlige relative Drehwinkelverstellung zwischen dem Antriebsteil und dem Abtriebsteil. Bei den Planetenexzentergetrieben wird diese relative Drehwinkelverstellung durch die unterschiedlichen Übersetzungen des ersten Zähnepaares bestehend aus Hohlrad und Innenrad und des zweiten Zähnepaares erreicht. Diese bekannten Planetenexzenterphasensteller nutzen zur Bewegungsübertragung zumeist Zahnräder mit Evolventenverzahnungen.

Ein als Zykloidgetriebe ausgebildetes Exzentergetriebe ist beispielsweise aus der DE 195 42 024 A1 bekannt. Dieses weist einen Stufenplanet mit einem großen und einem kleinen Planetenrad auf, welche in Wälzkörper der umliegenden Hohlräder eingreifen. Eine Welle des Exzenters ist einerseits in einer Aufnahme des kleinen Hohlrades und anderseits vom Exzenter in einer Aufnahme des großen Hohlrades über zwei Zentrallager gelagert. Die Übertragung der Bewegung des Exzenters auf den Stufenplaneten erfolgt über ein weiteres zwischen Exzenter und Stufenplaneten angeordnetes Rollenlager. Die beiden Hohlräder werden über ein Kreuzrollenlager zueinander gelagert. Problematisch bei dieser Ausführung ist die Lagerung der Exzenterwelle einerseits im ersten Hohlrad und anderseits im zweiten Hohlrad, welche beide lediglich über das Kreuzrollenlager zueinander ausgerichtet sind. Dies kann zu einer ungleichmäßigen Belastung der beiden Zentrallager führen, wodurch die Lebensdauer eines solchen Phasenstellers eingeschränkt wird.

Die DE 10 2009 000 690 A1 offenbart ein Exzentergetriebe mit als Zahnrädern ausgebildeten Hohlrädern und einem Stufenplaneten. Die Exzenterwelle wird über ein Doppelkugellager im Antriebsteil gelagert, während der Stufenplanet auf einem auf dem Exzenter angeordneten weiteren Doppelkugellager gelagert wird. Auch bei dieser Ausführung können Querkräfte auftreten, die durch die Lager nicht ausreichend aufgenommen werden können.

Es stellt sich daher die Aufgabe, eine Vorrichtung zur Phasenverschiebung des Drehwinkels eines Antriebsteils zu einem Abtriebsteil bereit zu stellen, welche eine hohe Lebensdauer aufweist, indem eine möglichst gleichmäßige, drehmomentfreie Belastung der Lager erzielt wird. Des Weiteren soll die Vorrichtung insbesondere in radialer Richtung möglichst wenig Bauraum benötigen. Zusätzlich soll der Phasensteller einfach zu montieren sein und kostengünstig hergestellt werden können.

Diese Aufgabe wird durch eine Vorrichtung zur Phasenverschiebung mit den Merkmalen des Hauptanspruchs gelöst.

Dadurch, dass die Exzenterwelle über ein erstes Lager und ein zweites Lager gelagert ist, welche an axial gegenüberliegenden Seiten der Innenräder und radial innerhalb des als Lageraufnahme für das erste und das zweite Lager dienenden Antriebsteils angeordnet sind, wird eine Lagerung zur Verfügung gestellt, mit der die Exzenterwelle und damit der Exzenter, auf den die Kraft der Zahnräder wirkt, breit abgestützt wird. Die Lager liegen an beiden axial entgegengesetzten Seiten der Kraftangriffsvektoren der ineinander greifenden Zahnradpaare. Des Weiteren erfolgt diese Lagerung innerhalb eines Bauteils, so dass auch auf die Lager wirkende Drehmomente durch Versatz oder Biegung nicht entstehen. So wird eine lange Lebensdauer des Phasenstellers sichergestellt. Der benötigte radiale Bauraum wird dadurch, dass die Lager axial nebeneinander angeordnet werden verringert.

Vorzugsweise weist das Antriebsteil eine sich radial erstreckende Wandfläche auf, in der Durchgangsöffnungen ausgebildet sind, durch die sich Halteelemente des Abtriebsteils in einen Innenraum des Antriebsteils erstrecken, wobei die Halteelemente des Abtriebsteils in Umfangsrichtung kleiner ausgeführt sind als die Durchgangsöffnungen. Es wird auf diese Weise eine Durchspeichung des Antriebsteils erzeugt, was dazu führt, dass der benötigte radiale Bauraum reduziert wird. Die Verbindung zwischen der Nockenwelle und dem Abtriebshohlrad wird so als kürzeste Verbindung hergestellt und dennoch wird das zweite Lager innerhalb des Antriebsteils angeordnet. Die Ausformung der Durchgangsöffnungen legt des Weiteren auf einfache Art und Weise einen maximalen relativen Verdrehwinkel zwischen dem Antriebsteil und dem Abtriebsteil fest.

Es ist auch vorteilhaft, im Innenraum des Antriebsteils das zweite Hohlrad anzuordnen, welches mittels der Halteelemente formschlüssig mit einer sich radial erstreckenden Wandfläche des Abtriebsteils verbunden ist, welche an der zum zweiten Hohlrad axial gegenüberliegenden Seite der sich radial erstreckenden Wandfläche des Antriebsteils angeordnet ist. So wird eine einfache steckbare Verbindung zur Montage des Abtriebsteils geschaffen.

Eine einfache Herstellbarkeit dieser formschlüssigen Verbindung ergibt sich, wenn die Halteelemente Vorsprünge sind, die sich von der sich radial erstreckenden Wandfläche des Abtriebsteils durch die Durchgangsöffnungen der Wandfläche des Antriebsteils erstrecken und in korrespondierende Aufnahmeöffnungen eines Trägerelementes des zweiten Hohlrades ragen. So wird auf einfache Weise eine drehfeste Verbindung geschaffen, wobei auch ein axiales Auseinanderfallen durch das kompakte axiale Anliegen der Bauteile aneinander zuverlässig verhindert wird.

Vorzugsweise erstreckt sich von der sich radial erstreckenden Wandfläche des Antriebsteils ein ringförmiger Vorsprung in den Innenraum, der als Lageraufnahme für das zweite Lager der Exzenterwelle dient. So wird mit einfach aufgebauten und herstellbaren Teilen die Lageraufnahme für das zweite Lager bereitgestellt.

In einer vorteilhaften Ausgestaltung der Erfindung weist das Antriebsteil eine radial begrenzende Außenwand auf, an deren ersten axialen Ende die sich radial erstreckende Wandfläche angeordnet ist und an deren entgegengesetztem axialen Ende eine zweite axial begrenzende Wandfläche ausgebildet ist, die einen Absatz aufweist, der als Lageraufnahme für das erste Lager dient. So bildet das Antriebsteil ein umliegendes Gehäuse für das Getriebe mit den Lagern, wodurch eine weitestgehend leckagefreie Schmierung ermöglicht wird.

In einer hierzu weiterführenden Ausführungsform gleitet das Trägerelement des Abtriebsteils an einer Innenfläche der radialen Außenwand des Antriebsteils, wodurch auch das Abtriebsteil zum Antriebsteil positioniert gelagert wird und die notwendigen Stellkräfte verringert werden.

Vorzugsweise ist axial zwischen dem ersten Hohlrad und dem zweiten Hohlrad eine Gleitscheibe angeordnet. Durch diese Maßnahme wird ein Anlaufen der Zahnräder verhindert und Stellkräfte verringert.

Eine besonders zuverlässige axiale und drehfeste Verbindung des Abtriebsteils ergibt sich, wenn das Abtriebsteil eine Nockenwelle eines Ventiltriebs eines Verbrennungsmotors aufweist, an der über eine zentral im Innern der Exzenterwelle liegende Schraube und einen Befestigungsstift die sich radial erstreckende Wandfläche des Abtriebsteils befestigt ist. Über die zentrale Schraube kann auf einfache Weise die Nockenwelle am übrigen Abtriebsteil insbesondere der sich radial erstreckenden Wandfläche montiert werden, wobei durch den Stift ein Verdrehen der Nockenwelle zur Wandfläche verhindert wird.

Zur Verstellung der relativen Phasenlage ist vorteilhafterweise eine Ausgangswelle des Aktors mit dem Exzenter gekoppelt und dreht in Phasen ohne Phasenverschiebung mit der gleichen Drehzahl wie das Antriebsteil und das Abtriebsteil. Wird eine unterschiedliche Drehwinkelgeschwindigkeit zwischen dem Exzenter und dem Antriebsteil hergestellt, wodurch die Nockenwelle entweder kurzzeitig schneller oder langsamer dreht, führt diese zur Verstellung der relativen Phasenlage des Antriebsteils zum Abtriebsteil. Eine Kopplung der Ausgangswelle des Aktors zur Exzenterwelle von dieser freien Seite ist aufgrund der freien Erreichbarkeit einfach vorzunehmen.

Vorzugsweise sind die beiden Innenräder über ein Nadellager auf dem Exzenter gelagert. Über das Nadellager kann die Kraft beider Innenräder zentral im Bereich der Nadeln sicher aufgenommen werden.

Es ist des Weiteren vorteilhaft, wenn die Exzenterwelle an der einen axialen Seite des Exzenters im Durchmesser größer ist als die maximale Ausdehnung des Exzenters in radialer Richtung und an der entgegengesetzten axialen Seite des Exzenters im Durchmesser kleiner ist als die minimale Ausdehnung des Exzenters in radialer Richtung. Ein solcher Aufbau ermöglicht die einteilige Herstellung des Exzenters mit der Exzenterwelle und die Anordnung der Lager auf ihren Laufflächen. Auch kann das Nadellager und mit ihm die Innenräder über eine zu montierende Feder zum Spielausgleich zwischen Exzenter und Lager radial verspannt werden.

Es wird somit eine Vorrichtung zur Phasenverstellung geschaffen, welche insbesondere in radialer Erstreckungsrichtung sehr kompakt aufgebaut und kostengünstig herstellbar und einfach montierbar ist. Mit dieser Vorrichtung wird gleichzeitig eine hohe Lebensdauer der Lager sichergestellt, da Biegemomente, die auf die Lager wirken, vermieden werden.

Ein Ausführungsbeispiel einer solchen Vorrichtung zur Phasenverstellung ist in den Figuren dargestellt und wird nachfolgend anhand einer Verwendung der Vorrichtung als Phasensteller für eine Nockenwelle eines Ventiltriebs eines Verbrennungsmotors beschrieben.

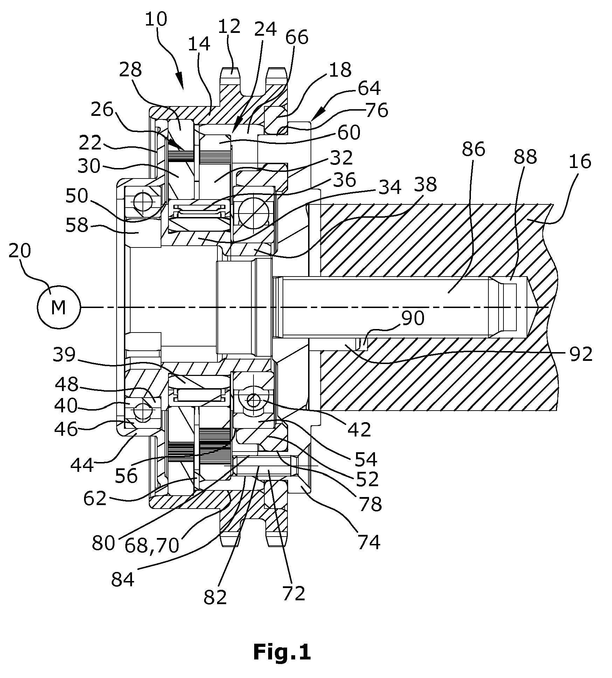

Figur 1 zeigt eine Seitenansicht einer erfindungsgemäßen Vorrichtung zur Phasenverschiebung in geschnittener Darstellung.

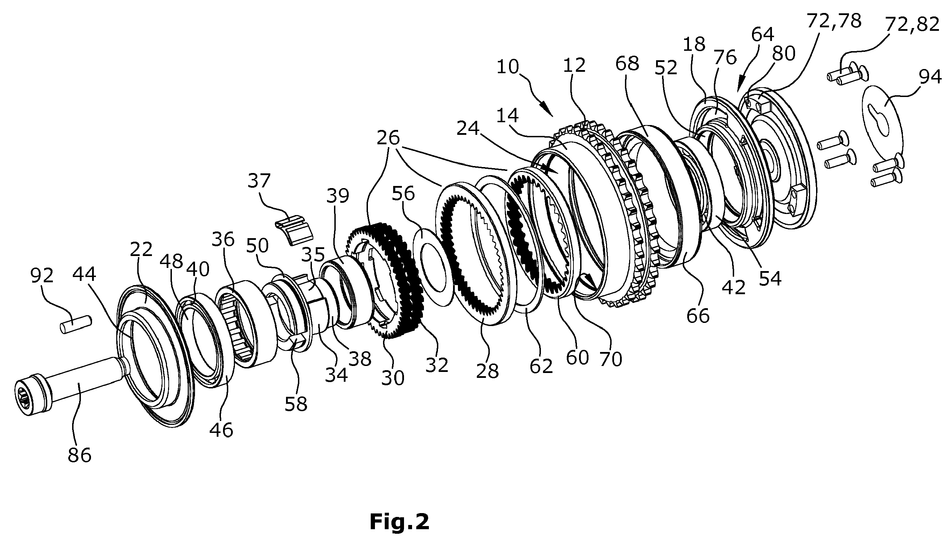

Figur 2 zeigt eine teilweise gesprengte Darstellung der Vorrichtung zur Phasenverstellung in perspektivischer Darstellung.

Die dargestellte Vorrichtung zur Phasenverschiebung besteht aus einem Antriebsteil 10, an dessen Außenumfang ein Kettenrad 12 ausgebildet ist, über welches das Antriebsteil 10 in einem festen Übersetzungsverhältnis zu einer nicht dargestellten Kurbelwelle angetrieben wird. Das Kettenrad 12 ist auf einer ringförmigen Außenwand 14 angeordnet, die den Phasensteller radial begrenzt. An dem einen axialen Ende dieser Außenwand 14 ist eine zu einer anzutreibenden Nockenwelle 16 gerichtete erste sich radial erstreckende Wandfläche 18 ausgebildet und an dem anderen axialen Ende befindet sich eine zu einem Aktor 20 gerichtete zweite das Antriebsteil 10 axial begrenzende Wandfläche 22. Dieses Antriebsteil 10 begrenzt entsprechend einen Innenraum 24, in dem ein Exzentergetriebe 26 angeordnet ist.

Dieses Exzentergetriebe 26 besteht aus einem als Antriebszahnrad dienenden ersten innenverzahnten Hohlrad 28, welches radial gegen die Außenwand 14 anliegt und axial gegen die zweite Wandfläche 22 anliegt und am Antriebsteil 10 beispielsweise durch Presspassung der Außenwand 14 befestigt ist.

Dieses Hohlrad 28 steht in Eingriff mit einem ersten außenverzahnten Innenrad 30, welches gemeinsam mit einem drehfest mit dem ersten Innenrad 30 formschlüssig verbundenen zweiten außenverzahnten Innenrad 32 auf einem Exzenter 34 gelagert ist. Die Lagerung erfolgt über ein Nadellager 36, welches somit radial zwischen dem Exzenter 34 und den Innenrädern 30, 32 angeordnet ist. Zum Ausgleich von Toleranzen ist am Exzenter 34 eine Ausnehmung 35 ausgebildet, in der ein Federelement 37 angeordnet ist, über welches ein Innenring 39 des Nadellagers 36 am Exzenter 34 verspannt wird.

Der Exzenter 34 ist an einer Exzenterwelle 38 ausgebildet, die erfindungsgemäß über ein im Ausführungsbeispiel als Kugellager ausgebildetes erstes Lager 40 und ein zweites als Kugellager ausgebildetes Lager 42 im Antriebsteil 10 gelagert wird. Hierzu weist die zum Aktor 20 gerichtete Wandfläche 22 einen Absatz 44 auf, der als Lageraufnahme dient, wobei ein Außenring 46 des Lagers 40 radial gegen den Absatz 44 anliegt und axial gegen die sich weiter nach radial innen erstreckende Wandfläche 22. Ein Innenring 48 liegt an der entgegengesetzten axialen Seite gegen einen sich radial erstreckenden ringförmigen Vorsprung 50 der Exzenterwelle 38 an. Als Lageraufnahme für das zweite Lager 42 dient ein sich axial in den Innenraum 24 erstreckender ringförmiger Vorsprung 52, der im radial inneren Bereich der ersten Wandfläche 18 des Antriebsteils 10 ausgebildet ist. Ein Außenring 54 dieses Lagers 42 liegt axial gegen eine Anlaufscheibe 56 an, die das Lager 42 räumlich vom zweiten Innenrad 32 trennt. Radial liegt dieser Außenring gegen den Vorsprung 52 an, axial an der zur Anlaufscheibe 56 entgegengesetzten Seite, gegen die Wandfläche 18.

Die Exzenterwelle 38 weist einen sich vom Aktor 20 in Richtung der Wandfläche 18 stufenförmig verringernden Durchmesser auf, wodurch die Montage der Lager 36, 40, 42 auf der Exzenterwelle 38 deutlich erleichtert wird. Im radial Inneren weist die als Hohlwelle ausgeführte Exzenterwelle 38 Ausnehmungen 58 auf, in die entsprechende Vorsprünge einer nicht dargestellten Ausgangswelle des Aktors 20 zur drehfesten Verbindung greifen.

Das Exzentergetriebe 26 wird durch ein zweites, innenverzahntes Hohlrad 60 vervollständigt, welches mit dem zweiten Innenrad 32 in Eingriff steht. Zwischen diesem zweiten Hohlrad 60 und dem ersten Hohlrad 28 ist eine Gleitscheibe 62 angeordnet, so dass eine gleitende relative Verdrehung der beiden Hohlräder 28, 60 zueinander ermöglicht wird.

Das Hohlrad 60 ist an einem Abtriebsteil 64 befestigt, welches aus einem Trägerelement 66 besteht, welches fest mit dem Hohlrad 60 verbunden ist und dessen Außenfläche 68 an einer Innenfläche 70 der radial begrenzenden Außenwand 14 des Antriebsteils 10 gleitend gelagert ist. Das Trägerelement 66 ist über Halteelemente 72 mit einer sich radial ersteckenden Wandfläche 74 des Abtriebsteils 64 verbunden, die durch Durchgangsöffnungen 76 ragen, die in der sich radial erstreckenden Wandfläche 18 des Antriebsteils 10 ausgebildet sind. Entsprechend befindet sich die radial erstreckende Wandfläche 74 an der axial zum Trägerelement 66 entgegengesetzten Seite der sich radial erstreckenden Wandfläche 18 des Antriebsteils 10. Im vorliegenden Ausführungsbeispiel werden die Halteelemente 72 durch Vorsprünge 78 gebildet, in denen Bohrungen 80 ausgebildet sind, durch die Schrauben 82 gesteckt werden, die in entsprechende als korrespondierende Aufnahmeöffnungen 84 dienende Gewindelöcher im Trägerelement 66 geschraubt werden. Selbstverständlich sind auch andere Befestigungen möglich.

Die Durchgangsöffnungen 76 sind ringsegmentförmig ausgebildet und weisen in Umfangsrichtung eine deutlich größere Ausdehnung auf als die durch sie hindurch ragenden Vorsprünge 78. Entsprechend wird ein relativer Drehwinkel zwischen dem Abtriebsteil 64 und dem Antriebsteil 10 durch die Größe der Durchgangsöffnungen 76 definiert.

Die sich radial erstreckende Wandfläche 74 des Abtriebsteils 64 wird mit der Nockenwelle 16 über eine zentrale Schraube 86 verbunden, die in ein Gewindeloch 88 der Nockenwelle 16 gedreht wird, wodurch die sich radial erstreckende Wandfläche 74 mit der Nockenwelle 16 verspannt wird. Um die drehfeste Verbindung sicherzustellen, ist sowohl in der Nockenwelle 16 als auch in der Wandfläche 74 eine dezentrale Öffnung 90 ausgebildet, durch die ein Stift 92 gesteckt wird. Zusätzlich befindet sich axial zwischen dem Ende der Nockenwelle 16 und der Wandfläche 74 ein optionaler Reibring 94, durch den ebenfalls der Stift 92 ragt.

Im Betrieb wird das Kettenrad 12 über die Kette von der Kurbelwelle angetrieben. Somit wird das Antriebsteil 10 gedreht. Durch einen Antrieb des Aktors 20 mit gleicher Geschwindigkeit greifen die Zähne der Innenräder 30, 32 jeweils an gleicher Position in die Zähne der Hohlräder 28, 60. Dies hat zur Folge das der Phasensteller als Paket gedreht wird, bei dem der Exzenter 34, die Zahnräder 28, 30, 32, 60 und das Antriebs- und Abtriebsteil 10, 64 mit gleicher Winkelgeschwindigkeit gedreht werden. Soll nun ein Phasenversatz stattfinden, wird der Aktor 20 mit einer anderen Winkelgeschwindigkeit gedreht als das Kettenrad 12. Dies hat zur Folge, dass die Innenräder 30, 32 relativ zum ersten Hohlrad 28 gedreht werden. Da die getriebliche Übersetzung zwischen dem ersten Hohlrad 28 und dem ersten Innenrad 30 eine andere ist als zwischen dem zweiten Hohlrad 60 und dem zweiten Innenrad 32, dreht sich das zweite Hohlrad 60 und damit das Abtriebsteil 64 und die Nockenwelle 16 mit einer anderen Winkelgeschwindigkeit als das Antriebsteil 10. Dabei drehen sich die Vorsprünge 78 entsprechend in den Durchgangsöffnungen 76, maximal bis der Anschlag an einer der Umfangsenden der Durchgangsöffnungen erreicht wird. Ein solcher Anschlag dient als fail-safe Position für den Ausfall des Elektromotors und kann je nach Wahl des Übersetzungsverhältnisses in einem frühen oder späten Anschlag ausgeführt werden. Durch langsameres oder schnelleres Drehen des Aktors 20 kann somit die Ventilöffnungszeit entweder nach früh oder nach spät verschoben werden.

Die beschriebene Vorrichtung zur Phasenverschiebung zeichnet sich durch einen sehr kompakten Aufbau aus. Insbesondere die radiale Ausdehnung der Vorrichtung ist minimiert, was einerseits durch die Durchspeichung des Antriebsteils durch das Abtriebsteil und andererseits durch die axial nebeneinander liegende Anordnung der Lager erreicht wird. Diese Anordnung der Lager und deren Aufnahme im Antriebsteil führen gleichzeitig dazu, dass die Lager keine Querkräfte durch auf die Lager wirkende Biegemomente aufnehmen müssen. Stattdessen wird die Exzenterwelle an ihren axialen Enden breit gelagert, während die Kraftangriffspunkte zwischen den beiden Lagern angeordnet sind. Die vollständige Aufnahme beider Lager im Antriebsteil verhindert zudem Querkräfte, die bei Anordnung in unterschiedlichen Bauteilen durch einen geringfügigen Versatz der Mittelachse zustande kommen könnten. So wird ein klein bauender und einfach herstellbarer und montierbarer Phasensteller mit einer langen Lebensdauer geschaffen.

Es sollte deutlich sein, dass verschiedene konstruktive Modifikationen im Vergleich zu den beschriebenen Ausführungsformen möglich sind, ohne den Schutzbereich des Hauptanspruchs zu verlassen. So können angepasste gewünschte Übersetzungen gewählt werden oder die beschriebene Vorrichtung auch für andere Anwendungen gegebenenfalls mit für die Anwendung angepasster Übersetzung verwendet werden. Insbesondere durch die Wahl eines positiven oder negativen Übersetzungsverhältnisses kann der fail-safe-Anschlag des Getriebes bestimmt werden. Die vorliegenden festen oder drehfesten Verbindungen können beispielsweise durch gleichwirkende andere bekannte Verbindungen ersetzt werden.

## Patentansprüche

1. Vorrichtung zur Phasenverschiebung des Drehwinkels eines Antriebsteils zu einem Abtriebsteil mit
einem Exzentergetriebe (26) bestehend aus
einem innenverzahnten ersten Hohlrad (28), welches drehfest mit dem Antriebsteil (10) verbunden ist,
einem innenverzahnten zweiten Hohlrad (60), welches drehfest mit dem Abtriebsteil (64) verbunden ist,
zwei drehfest miteinander verbundenen außenverzahnten Innenrädern (30, 32), die auf einem Exzenter (34) gelagert sind, der an einer Exzenterwelle (38) ausgebildet ist,
wobei das erste der beiden Innenräder (30) mit dem ersten Hohlrad (28) in Eingriff steht und das zweite der beiden Innenräder (32) mit dem zweiten Hohlrad (60) in Eingriff steht und die Übersetzung zwischen dem ersten Innenrad (30) und dem ersten Hohlrad (28) eine andere Übersetzung ist als die zwischen dem zweiten Innenrad (32) und dem zweiten Hohlrad (60),
und wobei die Exzenterwelle (38) über einen Aktor (20) drehbar ist,
**dadurch gekennzeichnet, dass**
die Exzenterwelle (38) über ein erstes Lager (40) und ein zweites Lager (42) gelagert ist, welche an axial gegenüberliegenden Seiten der Innenräder (30, 32) und radial innerhalb des als Lageraufnahme für das erste Lager (40) und das zweite Lager (42) dienenden Antriebsteils (10) angeordnet sind.

2. Vorrichtung zur Phasenverschiebung des Drehwinkels eines Antriebsteils zu einem Abtriebsteil nach Anspruch 1,
**dadurch, gekennzeichnet, dass**
das Antriebsteil (10) eine sich radial erstreckende Wandfläche (18) aufweist, in der Durchgangsöffnungen (76) ausgebildet sind, durch die sich Halteelemente (72) des Abtriebsteils (64) in einen Innenraum (24) des Antriebsteils (10) erstrecken, wobei die Halteelemente (72) des Abtriebsteils (64) in Umfangsrichtung kleiner ausgeführt sind als die Durchgangsöffnungen (76).

3. Vorrichtung zur Phasenverschiebung des Drehwinkels eines Antriebsteils zu einem Abtriebsteil nach Anspruch 2,
**dadurch gekennzeichnet, dass**
im Innenraum (24) des Antriebsteils (10) das zweite Hohlrad (60) angeordnet ist, welches mittels der Halteelemente (72) mit einer sich radial erstreckenden Wandfläche (74) des Abtriebsteils (64) verbunden ist, welche an der zum zweiten Hohlrad (60) axial gegenüberliegenden Seite der sich radial erstreckenden Wandfläche (18) des Antriebsteils (10) angeordnet ist.

4. Vorrichtung zur Phasenverschiebung des Drehwinkels eines Antriebsteils zu einem Abtriebsteil nach Anspruch 3,
**dadurch gekennzeichnet, dass**
die Halteelemente (72) Vorsprünge (78, 82) sind, die sich von der sich radial erstreckenden Wandfläche (74) des Abtriebsteils (64) durch die Durchgangsöffnungen (76) der Wandfläche (18) des Antriebsteils (10) erstrecken und in korrespondierende Aufnahmeöffnungen (84) eines Trägerelementes (66) des zweiten Hohlrades (60) ragen.

5. Vorrichtung zur Phasenverschiebung des Drehwinkels eines Antriebsteils zu einem Abtriebsteil nach einem der vorhergehenden Ansprüche,
**dadurch gekennzeichnet, dass**
sich von der sich radial erstreckenden Wandfläche (18) des Antriebsteils (10) ein ringförmiger Vorsprung (52) in den Innenraum (24) erstreckt, der als Lageraufnahme für das zweite Lager (42) der Exzenterwelle (38) dient.

6. Vorrichtung zur Phasenverschiebung des Drehwinkels eines Antriebsteils zu einem Abtriebsteil nach einem der vorhergehenden Ansprüche,
**dadurch gekennzeichnet, dass**
das Antriebsteil (10) eine radial begrenzende Außenwand (14) aufweist, an deren ersten axialen Ende die sich radial erstreckende Wandfläche (18) angeordnet ist und an deren entgegengesetztem axialen Ende eine zweite axial begrenzende Wandfläche (22) ausgebildet ist, die einen Absatz (44) aufweist, der als Lageraufnahme für das erste Lager (40) dient.

7. Vorrichtung zur Phasenverschiebung des Drehwinkels eines Antriebsteils zu einem Abtriebsteil nach Anspruch 6,
**dadurch gekennzeichnet, dass**
das Trägerelement (66) des Abtriebsteils (64) an einer Innenfläche (70) der radialen Außenwand (14) des Antriebsteils (10) gleitet.

8. Vorrichtung zur Phasenverschiebung des Drehwinkels eines Antriebsteils zu einem Abtriebsteil nach einem der vorhergehenden Ansprüche,
**dadurch gekennzeichnet, dass**
axial zwischen dem ersten Hohlrad (28) und dem zweiten Hohlrad (60) eine Gleitscheibe (62) angeordnet ist.

9. Vorrichtung zur Phasenverschiebung des Drehwinkels eines Antriebsteils zu einem Abtriebsteil nach einem der vorhergehenden Ansprüche,
**dadurch gekennzeichnet, dass**
das Abtriebsteil (64) eine Nockenwelle (16) eines Ventiltriebs eines Verbrennungsmotors aufweist, an der über eine zentral im Innern der Exzenterwelle (38) liegende Schraube (86) und einen Stift (92) die sich radial erstreckende Wandfläche (74) des Abtriebsteils (64) befestigt ist.

10. Vorrichtung zur Phasenverschiebung des Drehwinkels eines Antriebsteils zu einem Abtriebsteil nach einem der vorhergehenden Ansprüche,
**dadurch gekennzeichnet, dass**
eine Ausgangswelle des Aktors (20) mit der Exzenterwelle (38) gekoppelt ist und in Phasen ohne Phasenverschiebung mit der gleichen Drehzahl dreht wie das Antriebsteil (10) und das Abtriebsteil (64).

11. Vorrichtung zur Phasenverschiebung des Drehwinkels eines Antriebsteils zu einem Abtriebsteil nach einem der vorhergehenden Ansprüche,
**dadurch gekennzeichnet, dass**
die beiden Innenräder (30, 32) über ein Nadellager (36) auf dem Exzenter (34) gelagert sind.

12. Vorrichtung zur Phasenverschiebung des Drehwinkels eines Antriebsteils zu einem Abtriebsteil nach einem der vorhergehenden Ansprüche,
**dadurch gekennzeichnet, dass**
die Exzenterwelle (38) an der einen axialen Seite des Exzenters (34) im Durchmesser größer ist als die maximale Ausdehnung des Exzenters (34) in radialer Richtung und an der entgegengesetzten axialen Seite des Exzenters (34) im Durchmesser kleiner ist als die minimale Ausdehnung des Exzenters (34) in radialer Richtung.
